(19) Europäisches Patentamt

European Patent Office

Office européen des brevets

(11) Veröffentlichungsnummer: **0 321 387**
A1

## (12) EUROPÄISCHE PATENTANMELDUNG

(21) Anmeldenummer: 88730260.2

(22) Anmeldetag: 29.11.88

(51) Int. Cl.⁴: **C 10 L 5/44**
C 10 L 5/40

(30) Priorität: 16.12.87 DE 8716737

(43) Veröffentlichungstag der Anmeldung:
21.06.89 Patentblatt 89/25

(84) Benannte Vertragsstaaten: **AT CH FR LI SE**

(71) Anmelder: **BIO-HEIZSTOFFWERK BERLIN GMBH**
**Mariendorfer Damm 49**
**D-1000 Berlin 42 (DE)**

(72) Erfinder: **Jäckel, Heinz-Dieter**
**Mariendorfer Damm 49**
**D-1000 Berlin 42 (DE)**

(74) Vertreter: **Pfenning, Meinig & Partner**
**Kurfürstendamm 170**
**D-1000 Berlin 15 (DE)**

(54) **Brennstoffbrikett.**

(57) Es wird ein Brennstoffbrikett in Form eines Preßteils, vorteilhaft eines Holzscheits, beschrieben. Dieses besteht aus zerkleinerten Frischholzteilchen. Diese können zumindest zu einem Teil aus Rinde bestehen. Vorzugsweise enthält das Brikett zusätzlich Kunststoffteilchen.

EP 0 321 387 A1

**Beschreibung**

**Brennstoffbrikett**

Die Erfindung betrifft ein Brennstoffbrikett in Form eines aus zerkleinertem Material bestehenden Preßteils.

Es sind verschiedene Arten von festen Brennstoffen bekannt, die in der Regel durch Verpressen aus Abfall- oder Restmaterialien hergestellt werden.

Aus der EP 0 129 856 A2 sind ein Verfahren und eine Vorrichtung zur Erzeugung von als Brennstoff verwendbaren Preßlingen insbesondere aus naturfeuchter Biomasse, zum Beispiel aus naturfeuchten land- und forstwirtschaftlichen sowie gartenbaulichen Reststoffen oder aus entsprechend verwertbaren Gewerbemüllbestandteilen, bekannt. Die Biomasse wird zunächst zerkleinert und mit einem mikrokristallinen Wachs als Bindemittel vermischt. In einer Schneckenpresse wird sie anschließend zu einem Preßling geformt.

Bei Biomassen mit relativ hohen Feuchtigkeitsgehalten wird zur Bindung der Feuchte ein anorganisches Adsorptionsmittel zugemischt. Dieser Biobrennstoff hat aufgrund seiner Zusammensetzung und auch aufgrund der in der Regel hohen, nut gebundenen Feuchtigkeit einen relativ geringen Heizwert.

Aus der DE-OS 31 11 324 ist ein fester Brennstoff bekannt, der aus 10 % Papier, 20 % Stroh, 30 % Holz, 10 % Altöl, 5 % Altfett, 10 % Kunststoff, 5 % Ton, Lehm oder Schiefer und 5 % feingemahlenem und getrocknetem Schmiersand oder Verbrennungsrückständen hergestellt ist. Auch dieser Brennstoff enthält einen erheblichen Anteil an den Heizwert herabsetzenden Komponenten, so daß er ebenfalls nur beschränkt verwendbar ist.

In der DE-OS 32 39 154 ist ein Naturholzscheit beschrieben, das aus Restholzpreßlingen wie Holzschnitzeln, Sägemehl, Hobelspänen mit einem Gewichtsanteil von 50 bis 100%, Bindemitteln in Form von Wachsen bzw. Parafinen, synthetischen Klebern oder Naturklebern mit einem Gewichtsanteil von 0 bis 50 % sowie ätherischen Ölen, synthetischen Geruchsstoffen und Flammfärbemitteln mit einem Gewichtsanteil von weniger als 10 % besteht. Hier steht die möglichst getreue Nachbildung eines natürlichen Holzscheits in Vordergrund, nicht jedoch die Herstellung eines allgemein verwendbaren festen Brennstoffs mit hohem Heizwert. Auch können die Umwelt belastende Verbrennungsrückstände entstehen.

Es ist demnach die Aufgabe der vorliegenden Neuerung, ein Brennstoffbrikett aus in ausreichender Menge verfügbaren Restmaterialien zu schaffen, das einen relativ hohen Heizwert besitzt und umweltfreundlich ist und daher universell einsetzbar ist.

Diese Aufgabe wird erfindungsgemäß dadurch gelöst, daß das Brikett aus Frischholzteilchen gebildet ist.

Frisches Holz in zerkleinerter Form fällt in einem erheblichen Umfang an, zum Beispiel in Form von Sägemehl, Sägespänen und dergleichen. Für Verbrennungszwecke wurde es in dieser Form bisher nur in einer Mischung mit anderen Materialien verwendet. Durch das Verpressen des zerkleinerten frischen Holzes erhält man lager- und transportfähige Brennstoffbriketts, bei denen der Zellstoff des Holzes als Bindemittel wirkt. Diese Briketts haben einen Heizwert von etwa 20 000 kJ und eignen sich insbesondere zur Verbrennung in Haushalten, wobei sie speziell an Stelle von Holzscheiten bei der Feuerung in offenen Kaminen eingesetzt werden können. Sie verbrennen ohne die Entstehung umweltbelastender Gase und unter geringer Aschebildung. Sie sind daher für den Hausbrand und für die Industrieverbrennung grundsätzlich zulässig.

Der Feuchtigkeitsgehalt der Brennstoffbriketts liegt vorzugsweise unter 10 %. Dies ist vorteilhaft sowohl für die Heizkraft der Briketts als auch für deren Festigkeit. Um dies zu erreichen, wird vor der Pressung vorzugsweise eine Vortrocknung der Holzteilchen vorgenommen. Die Frischholzteilchen können zumindest zu einem Teil aus Rinde bestehen. Diese fällt in erheblichem Umfang an und hat auch einen für den Hausbrand ausreichenden Heizwert. Weiterhin kann das Brennstoffbrikett zusätzlich Kunststoffteilchen enthalten. Hierdurch wird der Heizwert beträchtlich erhöht. Als besonders geeigneter Kunststoff bietet sich Polyethylen an, das einen Heizwert von ca. 40 000 kJ besitzt und ohne die Entwicklung umweltschädlicher Gase verbrennt. Es bewirkt sogar eine Herabsetzung der Erzeugung von Schadstoffen, insbesondere Stickoxiden, da sich durch die Heizwerterhöhung eine höhere Verbrennungsteperatur einstellt, die zu einer vollständigen Verbrennung und damit einer geringeren Schadstofffreisetzung führt. Weiterhin erhöht es die Bindung zwischen den zusammengepreßten Teilchen des Briketts, so daß dieses ohne besondere Sorgfalt behandelt werden kann. Polyethylen ist ebenfalls ein reichlich anfallendes Abfallprodukt. Der Anteil des Polyethylens im Brennstoffbrikett liegt zweckmäßig zwischen 10 und 50 Gewichtsprozent.

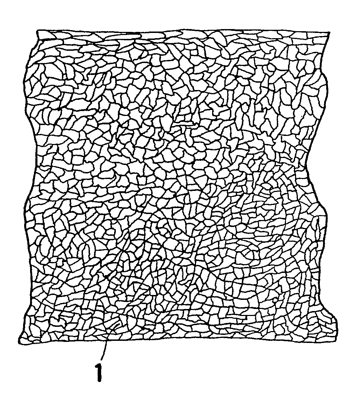

Die Erfindung wird im folgenden anhand eines in der Figur dargestellten Ausführungsbeispiels näher erläutert. Diese zeigt einen Ausschnitt aus einem Brennstoffbrikett im Querschnitt. Dieses besteht aus einer Vielzahl unregelmäßig geformter, miteinander verpreßter Holzteilchen 1. Der feste Verbund der Holzteilchen ergibt sich durch Zusammenpressen unter hohem Druck, beispielsweise bis zu 1800 kg/cm², in einer Preßvorrichtung mit vorzugsweise zwei umlaufenden parallelen Schnecken. Durch die Reibung der Teilchen aneinander und durch die hohe Verdichtung wird das Material zusätzlich so stark erwärmt, daß die in ihm enthaltene Feuchtigkeit weitgehend verdampft. Die Holzteilchen werden gegebenenfalls vor dem Verpressen zerkleinert. Durch den als Bindemittel wirkenden Zellstoff des Holzes entsteht beim Verpressen ein fester Verbund zwischen den einzelnen Holzteilchen.

Das verpreßte Material wird in einem endlosen Strang aus der Preßvorrichtung extrudiert und dann in Briketts geeigneter Länge zerschnitten. Die Form und Größe der Briketts kann dabei den jeweiligen Bedürfnissen bei der Verbrennung angepaßt werden. Bei der Verbrennung in offenen Kaminen empfiehlt sich die Verwendung von Briketts, die in ihrem Aussethen weitgehend an Holzscheite angeglichen sind.

**Patentansprüche**

1. Brennstoffbrikett in Form eines aus zerkleinertem Material bestehenden Preßteils, **dadurch gekennzeichnet,** daß es aus Frischholzteilchen (1) gebildet ist.

2. Brikett nach Anspruch 1, dadurch gekennzeichnet, daß sein Feuchtigkeitsgehalt weniger als 10 % beträgt.

3. Brikett nach Anspruch 1 oder 2, dadurch gekennzeichnet, daß die Frischholzteilchen (1) zumindet zu einem Teil aus Rinde bestehen.

4. Brikett nach einem der Ansprüche 1 bis 3, dadurch gekennzeichnet, daß es zusätzlich Kunststoffteilchen enthält.

5. Brikett nach Anspruch 4, dadurch gekennzeichnet, daß der Kunststoff Polyethylen ist.

6. Brikett nach Anspruch 4 oder 5, dadurch gekennzeichnet, daß der Anteil der Kunststoffteilchen 10 bis 50 Gewichtsprozent beträgt.

7. Brikett nach einem der Ansprüche 1 bis 6, dadurch gekennzeichnet, daß es die Form eines Holzscheits hat.

EP 0 321 387 A1

1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 631 195 (BIO-HEIZSTOFFWERK) <br> * Ansprüche 1-4; Figuren * <br> --- | 1-3,7 | C 10 L 5/44 <br> C 10 L 5/40 |
| A | US-A-3 947 255 (HARTMANN et al.) <br> * Ansprüche 1,4; Figuren * <br> ----- | 4-6 | |
| | | | **RECHERCHIERTE SACHGEBIETE (Int. Cl.4)** |
| | | | C 10 L |

Der vorliegende Recherchenbericht wurde für alle Patentansprüche erstellt

| Recherchenort | Abschlußdatum der Recherche | Prüfer |
|---|---|---|
| DEN HAAG | 15-03-1989 | MEERTENS J. |